# EUROPEAN PATENT APPLICATION

(11) **EP 3 174 324 A1**
(43) Date of publication of application: **31.05.2017**
(21) Application number: 14898188.9
(22) Date of filing: 21.07.2014
(51) Int. Cl.: H04W 12/00

(54) **MOBILITY MANAGEMENT ENTITY, HOME SERVER, TERMINAL, AND IDENTITY AUTHENTICATION SYSTEM AND METHOD**

(71) Applicant: Yulong Computer Telecommunication Scientific (Shenzhen) Co., Ltd., Shenzhen, Guangdong 518057 (CN)
(72) Inventor: ZHONG, Yantao, Shenzhen Guangdong 518057 (CN)
(74) Representative: DREISS Patentanwälte PartG mbB
(86) International application number: PCT/CN2014/082656
(87) International publication number: WO 2016/011588

(57) **Abstract**

The present invention provides a mobility management entity, a home server, a terminal, an identity authentication system and an identity authentication method. The mobility management entity comprises: a sending unit, configured to send an identity authentication request, an encryption key and a corresponding digital certificate to a terminal when detecting that a mapping relation between a globally unique temporary terminal identity and an international mobile subscriber identity code is lost, so that the terminal is enabled to verify the mobility management entity according to the digital certificate, use the encryption key to encrypt the international mobile subscriber identity code when the verification is successful, and send the encrypted international mobile subscriber identity code to the mobility management entity; a receiving unit, configured to receive the encrypted international mobile subscriber identity code sent by the terminal; and a decrypting unit, configured to decrypt the encrypted international mobile subscriber identity code according to a stored decryption key corresponding to the encryption key. By means of the technical solution of the present invention, it may be ensured that only a valid base station and a valid mobility management entity can implement the identity authentication process and acquire the international mobile subscriber identity code. (Fig. 4)

## Description

### Field of the Invention

The present invention relates to the technical field of terminals, and particularly, to a mobility management entity, a home server, a terminal, an identity authentication system and an identity authentication method.

### Background of the Invention

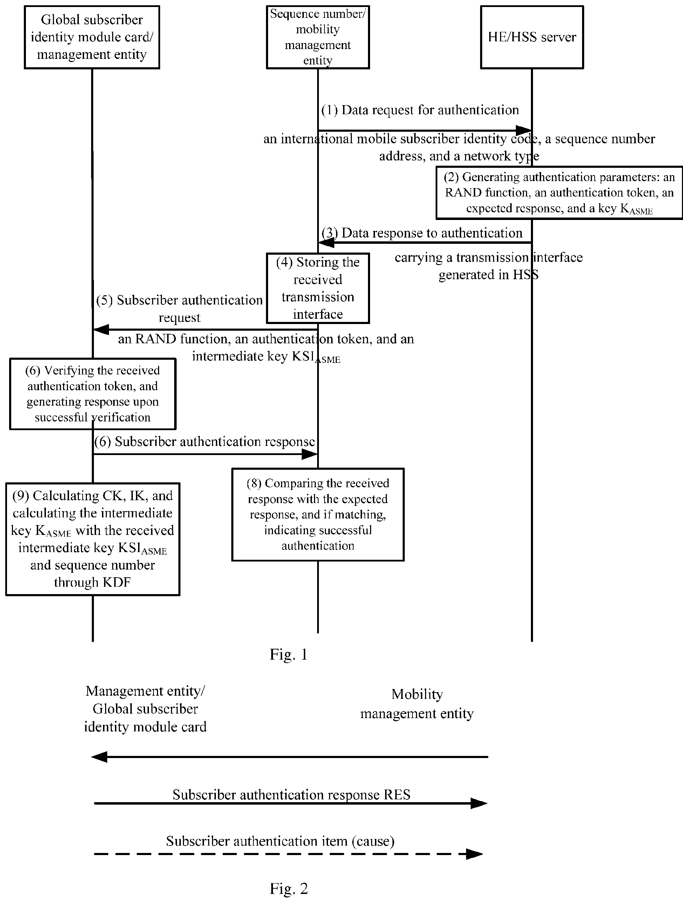

In a long term evolution (LTE) network, authentication and key agreement (AKA) in an evolved packet system (EPS) is important means of guaranteeing security, with the specific process of EPS-AKA as shown in Fig. 1.

An intermediate key K_{ASME} will be generated between user equipment (UE) and a mobility engagement entity (MME) after the AKA, and then an authentication process as shown in Fig. 2 will be carried out between the UE and the MME according to the key K_{ASME}. After the authentication is finished, the MME will allocate a globally unique temporary UE identity (GUTI) code to the UE, and maintains a mapping relation between the GUTI code and the international mobile subscriber identity (IMSI) code of the UE. In this way, the MME may originate a call to the UE by means of subscriber's GUTI code and realize subscriber tracking by tracking the IMSI code.

However, the MME may determine loss of the mapping relation between the GUTI code and the IMSI of the UE by mistake (e.g., the UE returns wrong RES; the UE returns a reject message carrying an MAC failure because an MAC parameter separated from AUTH parameters sent by the MME to the UE is verified to be incorrect; or the UE returns a reject message carrying information about non-EPS authentication unacceptable because the value of one of AMF parameters sent by the MME is incorrect); in this case, the MME will require the UE to send the IMSI code to the MME in the form of clear text, so as to re-allocate a GUTI code.

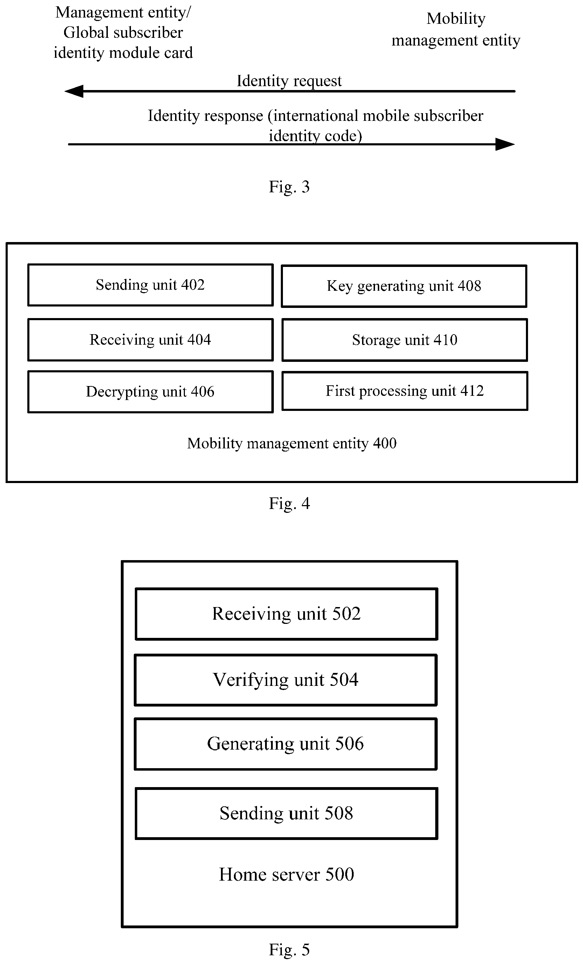

Then, an identity authentication process as shown in Fig.3 may be possibly used by an attacker. The attacker may transmit strong signals by means of a pseudo base station to overwhelm signals from a valid base station, and originate the identity authentication process as shown in Fig.3 with the signals from the pseudo base station to force the UE to send the IMSI code to the pseudo base station in the form of the clear text, and thus can acquire subscriber's IMSI code and illegally use the privacy information of the subscriber. It will pose a great threat to the privacy of the subscriber.

Therefore, it has been an urgent problem how to effectively protect the IMSI code sent by UE so as to ensure that only a valid base station and a valid MME can implement an identity authentication process and acquire an IMSI code, and an invalid base station and an invalid MME can neither implement the identity authentication process nor acquire the IMSI code of UE.

### Summary of the Invention

The present invention, exactly based on the above problem, provides a new technical solution such that the security of an IMSI code sent by UE may be effectively improved to guarantee that only a valid base station and a valid MME can implement an identity authentication process and acquire the IMSI code.

To this end, in one aspect of the present invention, a mobility management entity is provided, comprising: a sending unit, configured to send an identity authentication request, an encryption key and a digital certificate corresponding to the encryption key to a terminal when detecting that a mapping relation between a globally unique temporary terminal identity and an international mobile subscriber identity code is lost, so that the terminal is enabled to verify the mobility management entity according to the digital certificate, use the encryption key to encrypt the international mobile subscriber identity code when the verification is successful, and send the encrypted international mobile subscriber identity code to the mobility management entity; a receiving unit, configured to receive the encrypted international mobile subscriber identity code sent by the terminal; and a decrypting unit, configured to decrypt the encrypted international mobile subscriber identity code according to a stored decryption key corresponding to the encryption key.

In this technical solution, the mobility management entity (MME) sends the identity authentication request to the terminal. The terminal may ensure the validity of the mobility management entity by verifying the encryption key and the digital certificate corresponding to the encryption key, and thus prevent invasion of an invalid mobility management entity. Meanwhile, by encrypting the international mobile subscriber identity code, it can be ensured that only the valid mobility management entity having the decryption key corresponding to the encryption key can use the international mobile subscriber identity code, and an invalid mobility management entity cannot use the international mobile subscriber identity code due to no corresponding decryption key even after acquiring the international mobile subscriber identity code; thus, this will lead to effective improvement of the information security of a subscriber and prevention of theft of subscriber's international mobile subscriber identity code by the invalid MME.

Specifically, the encryption key and the decryption key may correspond to a public key and a private key. That is, the public key is used for encryption, and in the case of decryption, the private key corresponding to the public key is needed. Certainly, it will be understood by a person skilled in the art that the encryption method of the present application includes, but is not limited to, public key encryption, and other existing encryption methods may also be possible.

In the above technical solution, preferably, the mobility management entity further comprises: a key generating unit, configured to generate an encryption key and a decryption key corresponding to the encryption key upon a first network access of the mobility management entity; and a storage unit, configured to store the encryption key and the decryption key corresponding to the encryption key.

In this technical solution, since each mobility management entity corresponds to a pair of encryption key and decryption key and the encryption key and the decryption key in each pair also correspond to each other, the terminal is enabled to encrypt the international mobile subscriber identity code before sending the international mobile subscriber identity code to the mobility management entity in order to ensure that only the valid mobility management entity having the decryption key corresponding to the encryption key can use the international mobile subscriber identity code. This is advantageous for enhancing the security of the international mobile subscriber identity code.

In the above technical solution, preferably, the sending unit is also configured to send the encryption key and the entity identity information of the mobility management entity to a home subscriber manager, so that the home subscriber manager is enabled to verify the identity of the mobility management entity, and generate and send a digital certificate corresponding to the encryption key to the mobility management entity when the verification is successful. The receiving unit is also configured to receive the digital certificate corresponding to the encryption key sent by the home subscriber manager.

In this technical solution, a digital certificate corresponding to the encryption key is issued to each mobility management entity whose identity verification is successful, so that the terminal is enabled to verify the validity of the mobility management entity according to the digital certificate, thereby preventing theft of the international mobile subscriber identity code of the terminal by an invalid mobility management entity.

In the above technical solution, preferably, the mobility management entity further comprises: a processing unit, configured to stop the verification upon receiving a message of terminating verification sent by the terminal.

In this technical solution, it indicates that the terminal already determines the invalidity of the mobility management entity when the message of terminating verification sent by the terminal is received, and the mobility management entity cannot continue the identity verification.

In another aspect of the present invention, a home server is provided, comprising: a receiving unit, configured to receive an encryption key sent by a mobility management entity and the entity identity information of the mobility management entity; a verifying unit, configured to verify the identity of the mobility management entity according to the encryption key and the entity identity information of the mobility management entity; a generating unit, configured to generate a digital certificate corresponding to the encryption key when the verification is successful; and a sending unit, configured to send the digital certificate to the mobility management entity.

In this technical solution, a digital certificate corresponding to the encryption key is issued to each mobility management entity whose identity verification is successful, so that a terminal is enabled to verify the validity of the mobility management entity according to the digital certificate, thereby preventing theft of the international mobile subscriber identity code of the terminal by an invalid mobility management entity.

In yet another aspect of the present invention, a terminal is provided, comprising: a receiving unit, configured to receive an identity authentication request, an encryption key and a digital certificate sent by a mobility management entity; a verifying unit, configured to verify the digital certificate of the mobility management entity according to the identity authentication request; an encrypting unit, configured to encrypt, upon successful verification of the digital certificate, an international mobile subscriber identity code in the terminal with the encryption key sent by the mobility management entity to obtain the encrypted international mobile subscriber identity code; and a sending unit, configured to send the encrypted international mobile subscriber identity code to the mobility management entity.

In this technical solution, the validity of the mobility management entity can be guaranteed by verifying the digital certificate of the mobility management entity, and the security of the international mobile subscriber identity code can be further ensured by encrypting the international mobile subscriber identity code; thus, it can be ensured that only the valid mobility management entity can use the international mobile subscriber identity code.

In the above technical solution, preferably, the encrypting unit comprises: an acquiring unit, configured to acquire an international mobile subscriber identity code in the terminal upon successful verification of the digital certificate; and a computing unit, configured to compute the international mobile subscriber identity code according to the encryption key and a preset encryption function so as to obtain the encrypted international mobile subscriber identity code.

In the above technical solution, preferably, the terminal further comprises: a processing unit, configured to stop the verification upon unsuccessful verification of the digital certificate, and send a message of terminating verification to the mobility management entity.

In this technical solution, unsuccessful verification of the digital certificate indicates that the terminal already determines the invalidity of the mobility management entity; then, the terminal sends the message of terminating verification to the mobility management entity while stopping the verification, so that the mobility management entity is enabled to stop sending a digital certificate verification request to the terminal.

In still another aspect of the present invention, an identity authentication method is provided, used for an identity authentication system comprising a mobility management entity, a terminal and a home server. The method comprises the steps that: the mobility management entity sends an identity authentication request, an encryption key and a digital certificate corresponding to the encryption key to the terminal when detecting that a mapping relation between a globally unique temporary terminal identity and an international mobile subscriber identity code is lost; the terminal receives the identity authentication request, the encryption key and the digital certificate sent by the mobility management entity and verifies the digital certificate of the mobility management entity according to the identity authentication request; the terminal encrypts the international mobile subscriber identity code in the terminal with the encryption key sent by the mobility management entity upon successful verification of the digital certificate, and then sends the encrypted international mobile subscriber identity code to the mobility management entity; and the mobility management entity decrypts the encrypted international mobile subscriber identity code according to a stored decryption key corresponding to the encryption key.

In this technical solution, the mobility management entity (MME) sends the identity authentication request to the terminal. The terminal may ensure the validity of the mobility management entity by verifying the encryption key and the digital certificate corresponding to the encryption key, and thus prevent invasion of an invalid mobility management entity. Meanwhile, by encrypting the international mobile subscriber identity code, it can be ensured that only the valid mobility management entity having the decryption key corresponding to the encryption key can use the international mobile subscriber identity code, and an invalid mobility management entity cannot use the international mobile subscriber identity code due to no the corresponding decryption key even after acquiring the international mobile subscriber identity code; thus, this will lead to effective improvement of the information security of a subscriber and prevention of theft of subscriber's international mobile subscriber identity code by the invalid MME.

In the above technical solution, preferably, the identity authentication method may also comprise the following steps: sending, by the mobility management entity, the encryption key and the entity identity information of the mobility management entity to the home subscriber manager; receiving, by the home subscriber manager, the encryption key and the entity identity information of the mobility management entity sent by the mobility management entity, and then verifying the entity identity information of the mobility management entity; upon successful identity verification of the mobility management entity, generating, by the home subscriber manager, a digital certificate corresponding to the encryption key, and then sending the digital certificate to the mobility management entity; and receiving, by the mobility management entity, the digital certificate corresponding to the encryption key sent by the home subscriber manager.

In this technical solution, the entity identity information of the mobility management entity is verified and a digital certificate corresponding to the encryption key is issued to each mobility management entity, so that the terminal is enabled to verify the validity of the mobility management entity according to the digital certificate, thereby preventing theft of the international mobile subscriber identity code of the terminal by an invalid mobility management entity.

In the above technical solution, preferably, the identity authentication method further comprises the following step: generating, by the mobility management entity upon a first network access thereof, an encryption key and a decryption key corresponding to the encryption key, and then storing the encryption key and the decryption key corresponding to the encryption key.

In this technical solution, since each mobility management entity corresponds to a pair of encryption key and decryption key and the encryption key and the decryption key in each pair also correspond to each other, the terminal is enabled to encrypt the international mobile subscriber identity code before sending the international mobile subscriber identity code to the mobility management entity in order to ensure that only the valid mobility management entity having the decryption key corresponding to the encryption key can use the international mobile subscriber identity code. This is advantageous for enhancing the security of the international mobile subscriber identity code.

In the above technical solution, preferably, the step that the terminal encrypts the international mobile subscriber identity code in the terminal with the encryption key sent by the mobility management entity upon successful verification of the digital certificate specifically comprises: acquiring, by the terminal, an international mobile subscriber identity code upon successful verification of the digital certificate, and computing the international mobile subscriber identity code according to the encryption key and a preset encryption function to obtain the encrypted mobile subscriber identity code.

In the above technical solution, preferably, the identity authentication method further comprises: stopping, by the terminal, the verification upon unsuccessful verification of the digital certificates, and then sending a message of terminating verification to the mobility management entity; and stopping, by the mobility management entity, the verification upon receiving the message of terminating verification sent by the terminal.

In this technical solution, unsuccessful verification of the digital certificate indicates that the terminal already determines the invalidity of the mobility management entity; then, the terminal sends the message of terminating verification to the mobility management entity while stopping the verification, so that the mobility management entity is enabled to stop sending a digital certificate verification request to the terminal.

By means of the above technical solutions, the security of an IMSI code sent by UE can be effectively improved with a guarantee that only a valid base station and a valid MME can implement an identity authentication process and acquire the IMSI code.

### Brief Description of the Drawings

Fig. 1 shows a schematic flow diagram of authentication and key agreement in the relevant art;
Fig. 2 shows a schematic flow diagram of carrying out authentication and key agreement by means of K_{ASME} in the relevant art;
Fig. 3 shows a schematic flow diagram of issuing a digital certificate to a mobility management entity in the relevant art;
Fig. 4 shows a structural schematic diagram of a mobility management entity according to an embodiment of the present invention;
Fig. 5 shows a structural schematic diagram of a home server according to an embodiment of the present invention;
Fig. 6 shows a structural schematic diagram of a terminal according to an embodiment of the present invention;
Fig. 7 shows a structural schematic diagram of an identity authentication system according to an embodiment of the present invention;
Fig. 8 shows a schematic flow diagram of an identity authentication method according to an embodiment of the present invention;
Fig. 9 shows a schematic flow diagram of an identity authentication method according to another embodiment of the present invention; and
Fig. 10 shows a schematic flow diagram of issuing a digital certificate to a mobility management entity according to an embodiment of the present invention.

### Detailed Description of the Embodiments

To provide clearer understanding of the above objectives, features and advantages of the present invention, the present invention will be further described below in detail in combination with the accompanying drawings and embodiments. It needs to be noted that the embodiments of the present application and the features of the embodiments may be combined with one another without conflict.

While more specific details will be set forth in the following descriptions to provide adequate understanding of the present invention, the present invention may also be implemented in other manners than those described herein; therefore, the protection scope of the present invention is not limited to the specific embodiments disclosed below.

Fig. 4 shows a structural schematic diagram of a mobility management entity according to an embodiment of the present invention.

As shown in Fig. 4, the mobility management entity 400 according to the embodiment of the present invention comprises: a sending unit 402, configured to send an identity authentication request, an encryption key and a digital certificate corresponding to the encryption key to a terminal when detecting that a mapping relation between a globally unique temporary terminal identity and an international mobile subscriber identity code is lost, so that the terminal is enabled to verify the mobility management entity according to the digital certificate, use the encryption key to encrypt the international mobile subscriber identity code when the verification is successful, and send the encrypted international mobile subscriber identity code to the mobility management entity; a receiving unit 404, configured to receive the encrypted international mobile subscriber identity code sent by the terminal; and a decrypting unit 406, configured to decrypt the encrypted international mobile subscriber identity code according to a stored decryption key corresponding to the encryption key.

In this technical solution, the mobility management entity (MME) sends the identity authentication request to the terminal. The terminal may ensure the validity of the mobility management entity by verifying the encryption key and the digital certificate corresponding to the encryption key, and thus prevent invasion of an invalid mobility management entity. Meanwhile, by encrypting the international mobile subscriber identity code, it can be ensured that only the valid mobility management entity having the decryption key corresponding to the encryption key can use the international mobile subscriber identity code, and an invalid mobility management entity cannot use the international mobile subscriber identity code due to no the corresponding decryption key even after acquiring the international mobile subscriber identity code; thus, this will lead to effective improvement of the information security of a subscriber and prevention of theft of subscriber's international mobile subscriber identity code by the invalid MME.

Specifically, the encryption key and the decryption key may correspond to a public key and a private key. That is, the public key is used for encryption, and in the case of decryption, the private key corresponding to the public key is needed. Certainly, it will be understood by a person skilled in the art that the encryption method of the present application includes, but is not limited to, public key encryption, and other existing encryption methods may also be possible.

In the above technical solution, preferably, the mobility management entity further comprises: a key generating unit 408, configured to generate an encryption key and a decryption key corresponding to the encryption key upon a first network access of the mobility management entity; and a storage unit, configured to store the encryption key and the decryption key corresponding to the encryption key.

In this technical solution, since each mobility management entity corresponds to a pair of encryption key and decryption key and the encryption key and the decryption key in each pair also correspond to each other, the terminal is enabled to encrypt the international mobile subscriber identity code before sending the international mobile subscriber identity code to the mobility management entity in order to ensure that only the valid mobility management entity having the decryption key corresponding to the encryption key can use the international mobile subscriber identity code. This is advantageous for enhancing the security of the international mobile subscriber identity code.

In the above technical solution, preferably, the sending unit 402 is also configured to send the encryption key and the entity identity information of the mobility management entity to a home subscriber manager, so that the home subscriber manager is enabled to verify the identity of the mobility management entity, and generate and send a digital certificate corresponding to the encryption key to the mobility management entity when the verification is successful. The receiving unit 404 is also configured to receive the digital certificate corresponding to the encryption key sent by the home subscriber manager.

In this technical solution, a digital certificate corresponding to the encryption key is issued to each mobility management entity whose identity verification is successful, so that the terminal is enabled to verify the validity of the mobility management entity according to the digital certificate, thereby preventing theft of the international mobile subscriber identity code of the terminal by an invalid mobility management entity.

In the above technical solution, perferably, the mobility management entity further comprises: a processing unit 412, configured to stop the verification upon receiving a message of terminating verification sent by the terminal.

In this technical solution, it indicates that the terminal already determines the invalidity of the mobility management entity when the message of terminating verification sent by the terminal is received, and the mobility management entity may not continue the identity verification.

Fig. 5 shows a structural schematic diagram of a home server according to an embodiment of the present invention.

As shown in Fig. 5, the home server 500 according to the embodiment of the present invention comprises: a receiving unit 502, configured to receive an encryption key sent by a mobility management entity and the entity identity information of the mobility management entity; a verifying unit 504, configured to verify the identity of the mobility management entity according to the encryption key and the entity identity information of the mobility management entity; a generating unit 506, configured to generate a digital certificate corresponding to the encryption key when the verification is successful; and a sending unit 508, configured to send the digital certificate to the mobility management entity.

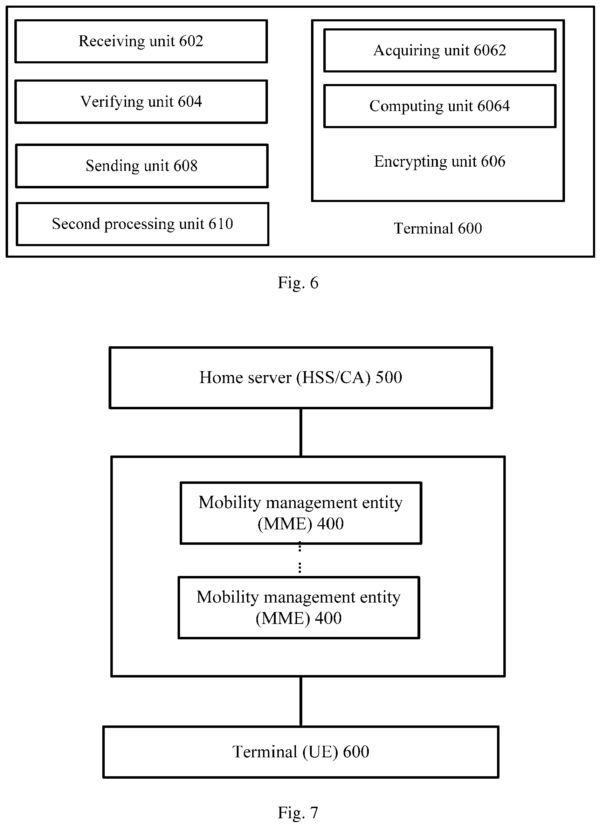

In this technical solution, a digital certificate corresponding to the encryption key is issued to each mobility management entity whose identity verification is successful, so that a terminal is enabled to verify the validity of the mobility management entity according to the digital certificate, thereby preventing theft of the international mobile subscriber identity code of the terminal by an invalid mobility management entity. Fig. 6 shows a structural schematic diagram of a terminal according to an embodiment of the present invention.

As shown in Fig. 6, the terminal 600 according to the embodiment of the present invention comprises: a receiving unit 602, configured to receive an identity authentication request, an encryption key and a digital certificate sent by a mobility management entity; a verifying unit 604, configured to verify the digital certificate of the mobility management entity according to the identity authentication request; an encrypting unit 606, configured to encrypt, upon successful verification of the digital certificate, an international mobile subscriber identity code in the terminal with the encryption key sent by the mobility management entity to obtain the encrypted international mobile subscriber identity code; and a sending unit 608, configured to send the encrypted international mobile subscriber identity code to the mobility management entity.

In this technical solution, the validity of the mobility management entity can be guaranteed by verifying the digital certificate of the mobility management entity, and the security of the international mobile subscriber identity code can be further ensured by encrypting the international mobile subscriber identity code; thus, it can be ensured that only the valid mobility management entity can use the international mobile subscriber identity code.

In the above technical solution, preferably, the encrypting unit 606 comprises: an acquiring unit 6062, configured to acquire an international mobile subscriber identity code in the terminal upon successful verification of the digital certificate; and a computing unit 6064, configured to compute the international mobile subscriber identity code according to the encryption key and a preset encryption function so as to obtain the encrypted international mobile subscriber identity code.

In the above technical solution, preferably, the terminal further comprises: a processing unit 610, configured to stop the verification upon unsuccessful verification of the digital certificate, and send a message of terminating verification to the mobility management entity.

In this technical solution, unsuccessful verification of the digital certificate indicates that the terminal already determines the invalidity of the mobility management entity; then, the terminal sends the message of terminating verification to the mobility management entity while stopping the verification, so that the mobility management entity is enabled to stop sending a digital certificate verification request to the terminal. Fig. 7 shows a structural schematic diagram of an identity authentication system according to an embodiment of the present invention.

As shown in Fig. 7, the identity authentication system according to the embodiment of the present invention comprises: a mobility management entity 400, a home server 500, and a terminal 600.

Specifically, the home server 500 is configured to verify the identity of the mobility management entity 400 and issue a digital certificate to the mobility management entity 400 upon successful identity verification of the mobility management entity 400.

The mobility management entity 400 is configured to send an identity authentication request, an encryption key and a digital certificate issued by the home server 500 to the terminal 600 when detecting that a mapping relation between a globally unique temporary terminal identity and an international mobile subscriber identity code is lost.

The terminal 600 is configured to verify the mobility management entity 400 according to the digital certificate, use the encryption key to encrypt the international mobile subscriber identity code when the verification is successful, and send the encrypted international mobile subscriber identity code to the mobility management entity 400.

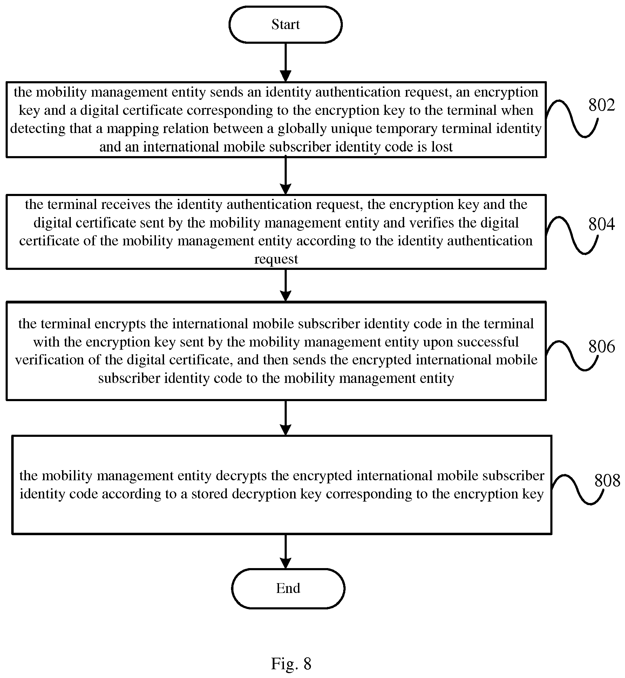

Fig. 8 shows a schematic flow diagram of an identity authentication method according to an embodiment of the present invention.

As shown in Fig. 8, the process of the identity authentication method according to the embodiment of the present invention comprises: step 802, the mobility management entity sends an identity authentication request, an encryption key and a digital certificate corresponding to the encryption key to the terminal when detecting that a mapping relation between a globally unique temporary terminal identity and an international mobile subscriber identity code is lost; step 804, the terminal receives the identity authentication request, the encryption key and the digital certificate sent by the mobility management entity and verifies the digital certificate of the mobility management entity according to the identity authentication request; step 806, the terminal encrypts the international mobile subscriber identity code in the terminal with the encryption key sent by the mobility management entity upon successful verification of the digital certificate, and then sends the encrypted international mobile subscriber identity code to the mobility management entity; and step 808, the mobility management entity decrypts the encrypted international mobile subscriber identity code according to a stored decryption key corresponding to the encryption key.

In this technical solution, the mobility management entity sends the identity authentication request to the terminal. The terminal may ensure the validity of the mobility management entity by verifying the encryption key and the digital certificate corresponding to the encryption key, and thus prevent invasion of an invalid mobility management entity. Meanwhile, by encrypting the international mobile subscriber identity code, it can be ensured that only the valid mobility management entity having the decryption key corresponding to the encryption key can use the international mobile subscriber identity code, and an invalid mobility management entity cannot use the international mobile subscriber identity code due to no the corresponding decryption key even after acquiring the international mobile subscriber identity code; thus, this will lead to effective improvement of the information security of a subscriber and prevention of theft of subscriber's international mobile subscriber identity code by the invalid MME.

In the above technical solution, preferably, the identity authentication method may also comprise the following steps: the mobility management entity sends the encryption key and the entity identity information of the mobility management entity to the home subscriber manager; the home subscriber manager receives the encryption key and the entity identity information of the mobility management entity sent by the mobility management entity, and then verifies the identity of the mobility management entity according to the encryption key and the entity identity information of the mobility management entity; upon successful identity verification of the mobility management entity, the home subscriber manager generates a digital certificate corresponding to the encryption key, and then sends the digital certificate to the mobility management entity; and the mobility management entity receives the digital certificate corresponding to the encryption key sent by the home subscriber manager.

In this technical solution, the entity identity information of the mobility management entity is verified and a digital certificate corresponding to the encryption key is issued to each mobility management entity, so that the terminal is enabled to verify the validity of the mobility management entity according to the digital certificate, thereby preventing theft of the international mobile subscriber identity code of the terminal by an invalid mobility management entity.

In the above technical solution, preferably, the identity authentication method further comprises the following step: the mobility management entity generates upon a first network access thereof an encryption key and a decryption key corresponding to the encryption key, and then stores the encryption key and the decryption key corresponding to the encryption key.

In this technical solution, since each mobility management entity corresponds to a pair of encryption key and decryption key and the encryption key and the decryption key in each pair also correspond to each other, the terminal is enabled to encrypt the international mobile subscriber identity code before sending the international mobile subscriber identity code to the mobility management entity in order to ensure that only the valid mobility management entity having the decryption key corresponding to the encryption key can use the international mobile subscriber identity code. This is advantageous for enhancing the security of the international mobile subscriber identity code.

In the above technical solution, preferably, the step that the terminal encrypts the international mobile subscriber identity code in the terminal with the encryption key sent by the mobility management entity upon successful verification of the digital certificate specifically comprises the following step: the terminal acquires an international mobile subscriber identity code upon successful verification of the digital certificate, and computes the international mobile subscriber identity code according to the encryption key and a preset encryption function to obtain the encrypted mobile subscriber identity code.

In the above technical solution, preferably, the identity authentication method further comprises the following steps: the terminal stops the verification upon unsuccessful verification of the digital certificate, and then sends a message of terminating verification to the mobility management entity; and the mobility management entity stops the verification upon receiving the message of terminating verification sent by the terminal.

In this technical solution, unsuccessful verification of the digital certificate indicates that the terminal already determines the invalidity of the mobility management entity; then, the terminal sends the message of terminating verification to the mobility management entity while stopping the verification, so that the mobility management entity is enabled to stop sending a digital certificate verification request to the terminal.

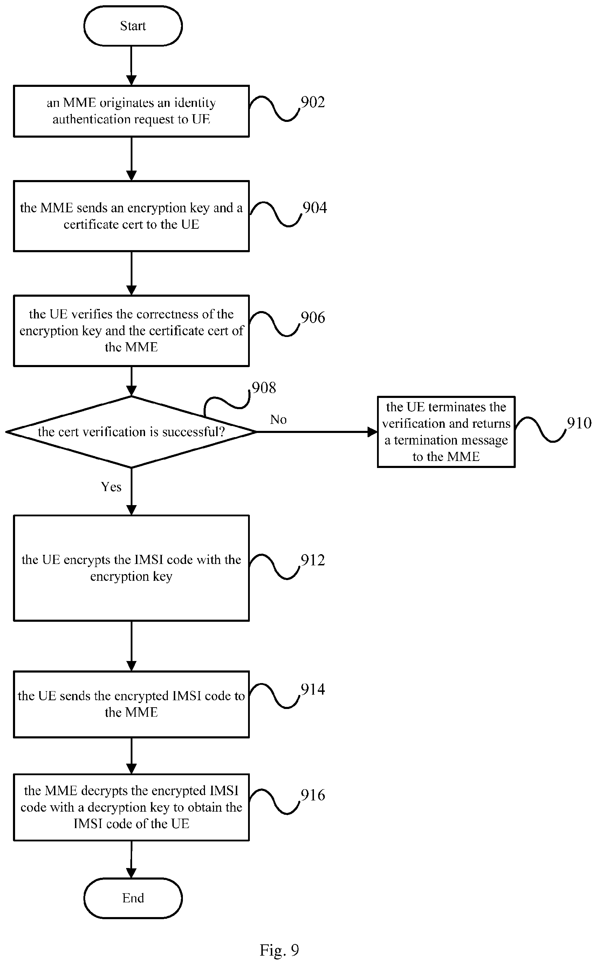

Fig. 9 shows a schematic flow diagram of an identity authentication method according to another embodiment of the present invention.

As shown in Fig. 9, the process of the identity authentication method according to another embodiment of the present invention comprises the following steps.

Step 902, an MME (mobility management entity) originates an identity authentication request to UE (terminal).

Step 904, the MME sends an encryption key and a certificate cert to the UE after the UE responds to the identity authentication request from the MME.

Step 906, the UE begins to verify the correctness of the encryption key and the certificate cert of the MME.

Step 908, a determination is made on whether the certificate cert of the MME successfully passes the verification, and when the certificate does not pass the verification, step 910 is executed; or otherwise, step 912 is executed.

Step 910, when the certificate of the MME does not pass the verification, the UE terminates the verification and returns a termination message to the MME.

Step 912, when the certificate of the MME passes the verification, the UE encrypts the IMSI code with the encryption key.

Step 914, the UE sends the encrypted IMSI code to the MME.

Step 916, the MME decrypts the encrypted IMSI code with a decryption key to obtain the IMSI code of the UE.

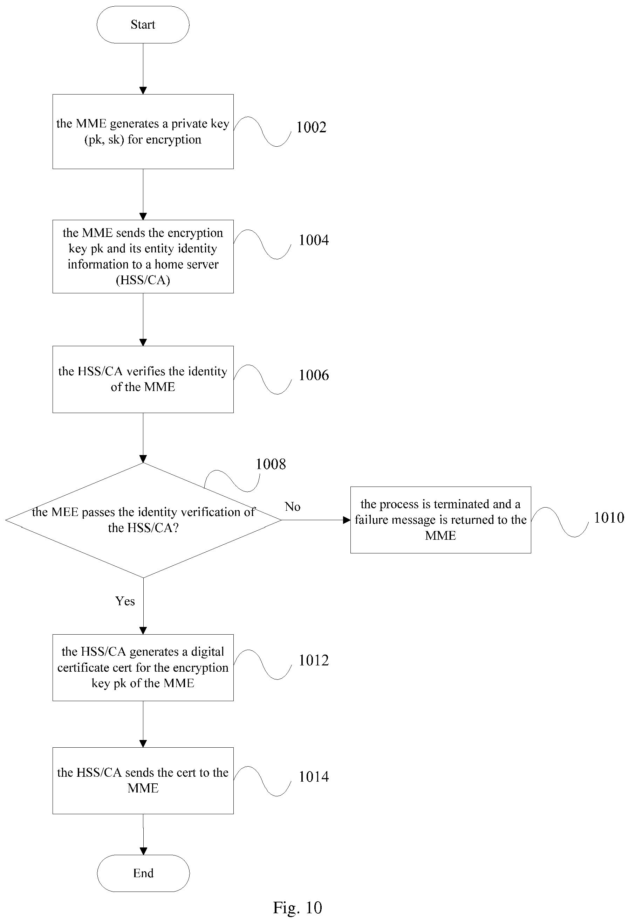

Fig. 10 shows a schematic flow diagram of issuing a digital certificate to a mobility management entity according to an embodiment of the present invention.

The process of a home server issuing a digital certificate to a mobility management entity will be described below in detail with an example of assuming an encryption key as a public key and a decryption key as a private key.

As shown in Fig. 10, the process of the home server issuing the digital certificate to the mobility management entity according to the embodiment of the present invention comprises the following steps.

Step 1002, the MME generates at the first network access a public key and a private key corresponding to the public key to form a pair of public and private keys (pk, sk). Step 1004, the MME sends the public key pk and its entity identity information to the home server (HSS/CA).

Step 1006, the HSS/CA begins to verify the identity of the MME.

Step 1008, the HSS/CA determines whether the MME can pass identity verification according to the entity identity information of the MME; when the MME does not pass the verification, step 1010 is executed; or otherwise, step 1012 is executed.

Step 1010, when the MME does not pass the identity verification, the HSS/CA terminates the verification and returns a termination message to the MME.

Step 1012, when the MME passes the identity verification, the HSS/CA generates a digital certificate cert corresponding to the public pk for the MME according to the public key pk of the MME.

Step 1014, the HSS/CA sends the cert to the MME.

The technical solutions of the present invention are described above in detail in conjunction with the accompanying drawings. By means of the technical solutions of the present invention, the security of the IMSI code sent by the UE can be effectively improved with a guarantee that only the valid base station and the valid MME can implement the identity authentication process and acquire the IMSI code.

According to the embodiments of the present invention, a program product stored on a non-volatile machine-readable medium is also provided for identity authentication. The program product comprises machine-executable instructions causing a computer system to execute the steps that: a mobility management entity sends an identity authentication request, an encryption key and a digital certificate corresponding to the encryption key to a terminal when detecting that a mapping relation between a globally unique temporary terminal identity and an international mobile subscriber identity code is lost; the terminal receives the identity authentication request, the encryption key and the digital certificate sent by the mobility management entity and verifies the digital certificate of the mobility management entity according to the identity authentication request; the terminal encrypts the international mobile subscriber identity code in the terminal with the encryption key sent by the mobility management entity upon successful verification of the digital certificate, and then sends the encrypted international mobile subscriber identity code to the mobility management entity; and the mobility management entity decrypts the encrypted international mobile subscriber identity code according to a stored decryption key corresponding to the encryption key.

According to the embodiments of the present invention, a non-volatile machine-readable medium in which a program product for identity authentication is also provided. The program product comprises machine-executable instructions causing a computer system to execute the steps that: a mobility management entity sends an identity authentication request, an encryption key and a digital certificate corresponding to the encryption key to a terminal when detecting that a mapping relation between a globally unique temporary terminal identity and an international mobile subscriber identity code is lost; the terminal receives the identity authentication request, the encryption key and the digital certificate sent by the mobility management entity and verifies the digital certificate of the mobility management entity according to the identity authentication request; the terminal encrypts the international mobile subscriber identity code in the terminal with the encryption key sent by the mobility management entity upon successful verification of the digital certificate, and then sends the encrypted international mobile subscriber identity code to the mobility management entity; and the mobility management entity decrypts the encrypted international mobile subscriber identity code according to a stored decryption key corresponding to the encryption key.

According to the embodiments of the present invention, a machine-readable program is also provided, which causes a machine to execute the identity authentication method as described in any one of the above technical solutions.

According to the embodiments of the present invention, a storage medium in which a machine-readable program is stored. Specifically, the machine-readable program causes a machine to execute the identity authentication method as described in any one of the above technical solutions.

The foregoing descriptions are merely preferred embodiments of the present invention and not intended to limit the present invention. For those skilled in the art, various changes and variations can be made to the present invention. Any modification, equivalent substitution, improvement and the like made within the spirit and principles of the present invention should fall into the protection scope of the present invention.

## Claims

1. A mobility management entity, comprising:
a sending unit, configured to send an identity authentication request, an encryption key and a digital certificate corresponding to the encryption key to a terminal when detecting that a mapping relation between a globally unique temporary terminal identity and an international mobile subscriber identity code is lost, so that the terminal is enabled to verify the mobility management entity according to the digital certificate, use the encryption key to encrypt the international mobile subscriber identity code when the verification is successful, and send the encrypted international mobile subscriber identity code to the mobility management entity;
a receiving unit, configured to receive the encrypted international mobile subscriber identity code sent by the terminal; and
a decrypting unit, configured to decrypt the encrypted international mobile subscriber identity code according to a stored decryption key corresponding to the encryption key.

2. The mobility management entity according to claim 1, further comprising:
a key generating unit, configured to generate an encryption key and a decryption key corresponding to the encryption key upon a first network access of the mobility management entity; and
a storage unit, configured to store the encryption key and the decryption key corresponding to the encryption key.

3. The mobility management entity according to claim 1, wherein
the sending unit is also configured to:
send the encryption key and the entity identity information of the mobility management entity to a home subscriber manager, so that the home subscriber manager is enabled to verify the identity of the mobility management entity, and
generate and send a digital certificate corresponding to the encryption key to the mobility management entity when the verification is successful; and
the receiving unit is also configured to:
receive the digital certificate corresponding to the encryption key sent by the home subscriber manager.

4. The mobility management entity according to any one of claims 1-3, further comprising:
a processing unit, configured to stop the verification upon receiving a message of terminating verification sent by the terminal.

5. A home server, comprising:
a receiving unit, configured to receive an encryption key sent by a mobility management entity and the entity identity information of the mobility management entity;
a verifying unit, configured to verify the identity of the mobility management entity according to the encryption key and the entity identity information of the mobility management entity;
a generating unit, configured to generate a digital certificate corresponding to the encryption key when the verification is successful; and
a sending unit, configured to send the digital certificate to the mobility management entity.

6. A terminal, comprising:
a receiving unit, configured to receive an identity authentication request, an encryption key and a digital certificate sent by a mobility management entity;
a verifying unit, configured to verify the digital certificate of the mobility management entity according to the identity authentication request;
an encrypting unit, configured to encrypt, upon successful verification of the digital certificate, an international mobile subscriber identity code in the terminal with the encryption key sent by the mobility management entity to obtain the encrypted international mobile subscriber identity code; and
a sending unit, configured to send the encrypted international mobile subscriber identity code to the mobility management entity.

7. The terminal according to claim 6, wherein the encrypting unit comprises:
an acquiring unit, configured to acquire an international mobile subscriber identity code in the terminal upon successful verification of the digital certificate; and
a computing unit, configured to compute the international mobile subscriber identity code according to the encryption key and a preset encryption function so as to obtain the encrypted international mobile subscriber identity code.

8. The terminal according to claim 6 or 7, further comprising:
a processing unit, configured to stop the verification upon unsuccessful verification of the digital certificate, and send a message of terminating verification to the mobility management entity.

9. An identity authentication system, comprising the mobility management entity of any one of claims 1-4, the home server of claim 5, and the terminal of any one of claims 6-8.

10. An identity authentication method, used for an identity authentication system comprising a mobility management entity, a terminal and a home server, wherein
the mobility management entity sends an identity authentication request, an encryption key and a digital certificate corresponding to the encryption key to the terminal when detecting that a mapping relation between a globally unique temporary terminal identity and an international mobile subscriber identity code is lost;
the terminal receives the identity authentication request, the encryption key and the digital certificate sent by the mobility management entity and verifies the digital certificate of the mobility management entity according to the identity authentication request;
the terminal encrypts the international mobile subscriber identity code in the terminal with the encryption key sent by the mobility management entity upon successful verification of the digital certificate, and then sends the encrypted international mobile subscriber identity code to the mobility management entity; and
the mobility management entity decrypts the encrypted international mobile subscriber identity code according to a stored decryption key corresponding to the encryption key.

11. The identity authentication method according to claim 10, further comprising:
sending, by the mobility management entity, the encryption key and the entity identity information of the mobility management entity to the home subscriber manager;
receiving, by the home subscriber manager, the encryption key and the entity identity information of the mobility management entity sent by the mobility management entity, and then verifying the identity of the mobility management entity according to the encryption key and the entity identity information of the mobility management entity;
upon successful identity verification of the mobility management entity, generating, by the home subscriber manager, a digital certificate corresponding to the encryption key, and then sending the digital certificate to the mobility management entity; and
receiving, by the mobility management entity, the digital certificate corresponding to the encryption key sent by the home subscriber manager.

12. The identity authentication method according to claim 10, **characterized by** further comprising:
generating, by the mobility management entity upon a first network access thereof, an encryption key and a decryption key corresponding to the encryption key, and then storing the encryption key and the decryption key corresponding to the encryption key.

13. The identity authentication method according to claim 10, wherein the step that the terminal encrypts the international mobile subscriber identity code in the terminal with the encryption key sent by the mobility management entity upon successful verification of the digital certificate specifically comprises:
upon successful verification of the digital certificate, acquiring, by the terminal, an international mobile subscriber identity code, and computing the international mobile subscriber identity code according to the encryption key and a preset encryption function to obtain the encrypted mobile subscriber identity code.

14. The identity authentication method according to any one of claims 10-13, further comprising:
upon unsuccessful verification of the digital certificate, stopping, by the terminal, the verification, and then sending a message of terminating verification to the mobility management entity; and
stopping, by the mobility management entity, the verification upon receiving the message of terminating verification sent by the terminal.
